# EUROPÄISCHE PATENTANMELDUNG

(11) **EP 3 412 427 A1**
(43) Veröffentlichungstag der Anmeldung: **12.12.2018**
(21) Anmeldenummer: 18187145.0
(22) Anmeldetag: 25.08.2014
(51) Int. Cl.: B29C 49/42, B29C 49/78, B29C 49/06, B29K 67/00, B29K 105/00, B29L 31/00, B29C 49/80

(54) **INSPEKTIONS- UND AUSWERFEREINHEIT**

(30) Priorität: 10.09.2013 CH 15612013
(62) Teilanmeldung aus: 14002949.7
(71) Anmelder: M. Tanner AG, 8308 Illnau (CH)
(72) Erfinder: Tanner, Marcel, 8303 Bassersdorf (CH)
(74) Vertreter: Schaad, Balass, Menzl & Partner AG

(57) **Zusammenfassung**

Die vorliegende Erfindung ist gerichtet auf eine Inspektions- und Auswerfereinheit für Vorformlinge für Kunststoffbehälter in einer Transportstrecke. Die Inspektions- und Auswerfereinheit weist zumindest eine Mitnehmervorrichtung (8) auf, welche von einer Zufördervorrichtung (2) zu der Inspektions- und Auswerfereinheit (1) gelangende Vorformlinge (10) aufnimmt, weitertransportiert und jedenfalls einen Teil der Vorformlinge (10) an eine Wegfördervorrichtung (3) weitergibt, zumindest eine Detektionsvorrichtung (6) mittels derer fehlerhafte Vorformlinge (10) in der Mitnehmervorrichtung (8) erkannt werden, sowie zumindest eine Auswurfvorrichtung (17, 25) mittels derer als fehlerhaft erkannte Vorformlinge (10) aus der Mitnehmervorrichtung (8) entfernt werden, und ein entsprechendes Verfahren.

## Beschreibung

Die vorliegende Erfindung betrifft eine Inspektions- und Auswerfereinheit für Vorformlinge für Kunststoffbehälter in einer Transportstrecke sowie ein entsprechendes Verfahren.

Eine Transportstrecke mit einem Klemmförderer für Vorformlinge für beispielsweise PET-Flaschen, ohne eine Inspektions- und Auswerfereinheit, wird etwa in der EP 1 925 575 A1 beschrieben.

Es ist die Aufgabe der vorliegenden Erfindung, in einer Transportstrecke für derartige Vorformlinge eine Möglichkeit für ein verlässliches Erkennen und Aussortieren von fehlerhaften Vorformlingen bereitzustellen, mittels derer der Transportfluss in der Transportstrecke so wenig als möglich beeinträchtigt wird.

Diese Aufgabe wird erstmalig gelöst in Übereinstimmung mit der vorliegenden Erfindung durch eine Inspektions- und Auswerfereinheit für Vorformlinge für Kunststoffbehälter in einer Transportstrecke, aufweisend zumindest eine Mitnehmervorrichtung, welche von einer Zufördervorrichtung zu der Inspektions- und Auswerfereinheit gelangende Vorformlinge aufnimmt, weitertransportiert und jedenfalls einen Teil der Vorformlinge an eine Wegfördervorrichtung weitergibt, zumindest eine Detektionsvorrichtung mittels derer fehlerhafte Vorformlinge in der Mitnehmervorrichtung erkannt werden, sowie zumindest eine Auswurfvorrichtung, mittels derer als fehlerhaft erkannte Vorformlinge aus der Mitnehmervorrichtung entfernt werden, sowie durch ein Verfahren zum Erkennen und Entfernen von fehlerhaften Vorformlingen für Kunststoffbehälter in einer Transportstrecke, mit den folgenden Schritten: (a) Aufnahme von von einer Zufördervorrichtung gelieferten Vorformlingen in korrespondierenden Ausnehmungen einer Mitnehmervorrichtung, (b) Transportieren der einzelnen Vorformlinge entlang einer definierten Wegstrecke (S) von der Zufördervorrichtung in Richtung einer Wegfördereinrichtung, (c) Erstellen von Bildaufnahmen von den einzelnen Vorformlingen in der Mitnehmervorrichtung mittels von zumindest einer Kamera einer Detektionsvorrichtung in einer Position (P1), vorzugsweise am Anfang der Wegstrecke (S), (d) Auswertung der Bildaufnahmen der einzelnen Vorformlinge in einer Auswerteeinheit der Detektionsvorrichtung, (e) Senden eines Signals von der Auswerteeinheit an zumindest eine Auswurfvorrichtung, wenn ein Vorformling als fehlerhaft erkannt wurde, und (f) Entfernen des fehlerhaften Vorformlings in einer Position (P2) der Wegstrecke (S), welche stromabwärts von der Position (P1) gelegen ist, mittels der zumindest einen Auswurfvorrichtung.

In einer bevorzugten Ausführungsform der vorliegenden Erfindung ist die Mitnehmervorrichtung in Form eines Nocken- bzw. Sternrades ausgestaltet, welches um eine vertikale Achse (X) angetrieben ist. Weiter bevorzugt gelangt mit jeder Ausnehmung des Nockenrades ein Vorformling in Eingriff. Auf diese Weise kann eine besonders effiziente Vereinzelung und eine präzise Inspektion der ankommenden Vorformlinge erreicht werden. Die Vorformlinge liegen bevorzugt mit ihrem Kragen bzw. Stützring auf dem Nockenrad auf, wobei Ausnehmungen des Nockenrades entsprechend mit dem im Wesentlichen zylindrischen Teil der Vorformlinge korrespondieren. Mit anderen Worten, die Vorformlinge gelangen auf im Wesentlichen formschlüssige Weise in Eingriff mit dem Nockenrad. Andere Arten des Eingriffs, wie etwa ein (rein) kraftschlüssiger oder aber ein form- und kraftschlüssiger Eingriff sind jedoch grundsätzlich auch denkbar. Der bevorzugte Antrieb um die vertikale Achse rührt daher, dass die Vorformlinge vorzugsweise in aufrechter Position (d.h. mit dem offenen Ende nach oben) in die Inspektions- und Auswerfereinheit gelangen.

In einer weiteren bevorzugten Ausführungsform der vorliegenden Erfindung weist die Detektionsvorrichtung zumindest eine Kamera und eine Auswerteeinheit auf. Mit der Kamera werden die Vorformlinge aufgenommen und mittels Bildverarbeitungsmethoden auf Fehler wie etwa Ovalität, Kragen- bzw. Stützringbeschädigungen und Mündungsverletzungen hin untersucht. Dabei erfolgt beispielsweise ein Abgleich mit in der Auswerteeinheit gespeicherten Solldaten für die jeweils zu inspizierenden Vorformlinge. Bei einer definierten Abweichung von den entsprechenden Solldaten wird dann ein Signal in der Auswerteeinheit erzeugt, welches an die entsprechende Auswurfvorrichtung gesandt wird, um den fehlerhaften Vorformling auszusortieren bzw. auszuwerfen. Je nach Art und Anzahl der verwendeten Kameras können ggf. auch die Oberflächenbeschaffenheit sowie die Bodenbeschaffenheit der Vorformlinge überprüft werden.

In einer anderen bevorzugten Ausführungsform der vorliegenden Erfindung ist die Auswurfvorrichtung eine pneumatische Auswurfvorrichtung, welche vorzugsweise in Form eines Luftrohrs oder aber einer Luftdüse ausgestaltet ist. Hierdurch kann auf einfache und kostengünstige Weise ein sicheres Auswerfen der fehlerhaften Rohlinge erreicht werden. Vermittels des Luftrohrs kann ggf. eine grössere Luftmenge gefördert werden als mit der Luftdüse, wohingegen mit der Luftdüse eine höhere Luftgeschwindigkeit erzielt werden kann als mit dem Luftrohr. Die Auswahl, welche Art von pneumatischer Auswurfvorrichtung zum Einsatz kommt, hängt jeweils von den Umständen ab, d.h. beispielsweise von der Art, Grösse und dem Gewicht der zu inspizierenden Vorformlinge. Im Allgemeinen wird derzeit die Verwendung eines Luftrohrs bevorzugt.

In einer noch weiteren bevorzugten Ausführungsform der vorliegenden Erfindung ist die Auswurfvorrichtung eine mechanische Auswurfvorrichtung, welche vorzugsweise in Form eines Stössels ausgestaltet ist. Eine derartige mechanische Auswurfvorrichtung gewährleistet ein gleichermassen zuverlässiges Auswerfen von fehlerhaften Vorformlingen mit vermindertem Luftverbrauch.

In einer noch anderen bevorzugten Ausführungsform der vorliegenden Erfindung wirft die Auswurfvorrichtung die Vorformlinge in vertikaler Richtung von unten nach oben aus. Dies hat sich als besonders zweckdienlich, zeitsparend und wenig störungsanfällig erwiesen. Besonders bevorzugt ist dabei zudem in fluchtender Anordnung oberhalb der Auswurfvorrichtung ein Austragsschacht vorgesehen, mittels welchem die ausgeworfenen Vorformlinge etwa in eine Sammelvorrichtung ausgetragen werden. Mit Hilfe des Austragsschachts wird sichergestellt, dass die ausgeworfenen Vorformlinge nicht in die Transportstrecke zurückfallen und dort Störungen verursachen. Zudem können die fehlerhaften Vorformlinge so leicht gesammelt werden.

Weiter vorzugsweise weist der Austragsschacht eine U-förmige bzw. bogenförmige Ausgestaltung auf sowie eine zusätzliche Luftdüse oder aber ein zusätzliches Luftrohr. Durch die U-förmige bzw. bogenförmige Ausgestaltung können die fehlerhaften Vorformlinge schnell in einen entsprechenden Sammelbehälter geleitet werden. Die zusätzliche Luftdüse bzw. das zusätzliche Luftrohr unterstützen den Austrag der fehlerhaften Vorformlinge. Die Vorformlinge werden so auf einem Luftkissen durch den Austragsschacht hindurch getragen. Ein Zurückfallen eines ausgeworfenen Vorformlings kann so auf besonders zuverlässige Weise unterbunden werden.

In einer alternativen Ausführungsform der erfindungsgemässen Inspektions- und Auswerfereinheit hebt die Auswurfvorrichtung die Vorformlinge zunächst in vertikaler Richtung von unten nach oben an (d.h. ohne diese bereits vollständig auszuwerfen). Dieses Anheben kann mittels eines Stössels erfolgen, bevorzugt wird allerdings eine Luftdüse verwendet, welche einen kurzen vertikalen Luftstoss abgibt, welcher den entsprechenden Vorformling um eine bestimmte Distanz (vorzugsweise um das 1 bis 2-fache seiner Länge) anhebt, so dass dieser anschliessend seitlich ausgeworfen werden bzw. in einen entsprechend angeordneten Sammelbehälter gelangen kann (d.h. der Vorformling muss zumindest soweit angehoben werden, dass ein sicherer Austrag ohne ein Hängenbleiben oder Verstopfen möglich ist). Oberhalb der Mitnehmervorrichtung ist für den seitlichen Austrag eine weitere Auswurfvorrichtung vorgesehen, mittels derer die angehobenen Vorformlinge in im Wesentlichen horizontaler Richtung ausgeworfen bzw. ausgeblasen werden, um dann zu der entsprechend angeordneten Sammelvorrichtung geleitet zu werden. Bevorzugt ist wiederum in fluchtender Anordnung oberhalb der Auswurfvorrichtung(en) ein Austragsschacht vorgesehen, mittels welchem ggf. zu stark angehobene Vorformlinge noch in die Sammelvorrichtung umgelenkt werden können. Die weitere Auswurfvorrichtung ist vorzugsweise im Austragsschacht bzw. im Bereich des Austragsschachts, besonders bevorzugt in einer Seitenwand des Austragsschachts, angeordnet. Die weitere Auswurfvorrichtung kann als Stössel ausgestaltet sein, vorzugsweise wird allerdings wiederum eine Luftdüse verwendet, welche einen im Wesentlichen horizontalen Luftstoss abgibt. Dieser Luftstoss ist regelmässig länger als der Luftstoss der vertikalen Luftdüse. Die horizontale Luftdüse kann insbesondere mehrere Düsen-Öffnungen aufweisen; auf diese Weise kann sichergestellt werden, dass die angehobenen Vorformlinge zuverlässig von der Mitnehmervorrichtung weg in den Sammelbehälter befördert werden, da eine grössere Fläche bzw. ein grösserer Raum abgedeckt werden kann.

In einer bevorzugten Ausführungsform des erfindungsgemässen Verfahrens erfolgt das Auswerfen gemäss Schritt (f) auf pneumatische oder mechanische Weise, bevorzugt in vertikaler Richtung von unten nach oben, wie bereits vorstehend erläutert.

In einer weiteren bevorzugten Ausführungsform des erfindungsgemässen Verfahrens werden die Vorformlinge durch einen Austragsschacht, welcher in fluchtender Anordnung oberhalb der Auswurfvorrichtung vorgesehen ist, ausgetragen, wobei in dem Austragsschacht vorzugsweise eine zusätzliche Luftdüse oder aber ein zusätzliches Luftrohr vorhanden ist, welche(s) ggf. gleichzeitig mit der Auswurfwurfvorrichtung aktiviert wird. Hierdurch wird auf besonders wirksame Weise sichergestellt, dass der ausgeworfene Vorformling "nahtlos" durch den Austragsschacht gefördert wird, ohne dass es zu einem Zurückfallen des Vorformlings auf die Transportstrecke bzw. auf das Nockenrad kommen kann.

In einer anderen bevorzugten Ausführungsform des erfindungsgemässen Verfahrens weist die Mitnehmervorrichtung ein vertikal angetriebenes Nockenrad auf und die Wegstrecke (S) beschreibt ungefähr einen Kreisbogen, vorzugsweise einen etwa 90° Kreisbogen und besonders bevorzugt einen etwa 120° Kreisbogen. Vermittels dieser Ausgestaltung kann ein reibungsloser (Weiter-) Transport der Vorformlinge von der Zufördervorrichtung (i.d.R. eine Ablaufschiene) zur Wegfördervorrichtung (i.d.R. ein Klemmförderer) erzielt werden. Die Kamera ist dabei im Anfangsbereich der halbkreisförmigen Wegstrecke (S) angeordnet, d.h. vorzugsweise benachbart zu dem Einlauf der Vorformlinge in das Nockenrad - beispielsweise über der zweiten oder dritten Ausnehmung des Nockenrades entlang der Wegstrecke (S). Weiter vorzugsweise liegt die Position (P2), in welcher die fehlerhaften Vorformlinge ausgeworfen werden, etwa 30° stromabwärts der Position (P1) entlang des Kreisbogens. Auf diese Weise verbleibt in jedem Fall eine genügend lange "Reaktionszeit" für die Auswerteeinheit zur Prüfung der Bildaufnahme des jeweiligen Vorformlings und ggf. zur Abgabe eines Signals zum Auswurf eines fehlerhaften Vorformlings an die Auswurfvorrichtung. Es ist allerdings auch möglich, die Wegstrecke (S) von der Aufnahme der Vorformlinge von der Ablaufschiene bis zur Abgabe der nicht-fehlerhaften Vorformlinge an den Klemmförderer, etwa auf einen Kreisbogen kleiner 90° zu begrenzen, wenn dies etwa aus Platz- oder sonstigen Gründen notwendig sein sollte. Kamera und Auswurfvorrichtung wären dann entsprechend näher beieinander. Andererseits ist es natürlich auch möglich, die Wegstrecke (S) zu verlängern auf einen Kreisbogen von etwa 180° oder 270°, falls dies aus Platz- oder sonstigen Gründen erforderlich sein sollte.

In einer alternativen Ausführungsform des erfindungsgemässen Verfahrens wird der fehlerhafte Vorformling (zunächst) in vertikaler Richtung von unten nach oben angehoben, um dann in horizontaler Richtung ausgeworfen zu werden, und zwar jeweils entweder auf pneumatische oder mechanische Weise (d.h. jeweils entweder mittels eines Stössels oder einer Luftdüse). Bevorzugt werden hierbei eine vertikal sowie (anschliessend) eine im Wesentlichen horizontal ausgerichtet Luftdüse verwendet, wobei die vertikale Luftdüse einen kurzen vertikalen Luftstoss auf den Boden des jeweiligen Vorformlings abgibt, mittels dem der Vorformling um eine bestimmte Distanz (vorzugsweise um das 1 bis 2-fache seiner Länge) angehoben wird, so dass dieser sicher ausgeworfen werden bzw. in den entsprechenden Sammelbehälter gelangen kann (d.h. er muss zumindest soweit angehoben werden, dass ein sicherer Austrag ohne ein Hängenbleiben oder Verstopfen möglich ist). Oberhalb der Mitnehmervorrichtung ist die im Wesentlichen horizontal ausgerichtete weitere Auswurfvorrichtung (d.h. im Regelfall eine horizontale Luftdüse) vorgesehen, mittels derer die angehobenen Vorformlinge in im Wesentlichen horizontaler Richtung ausgeworfen werden bzw. zu der entsprechend angeordneten Sammelvorrichtung geblasen werden. Bevorzugt erfolgt das Anheben des fehlerhaften Vorformlings mittels eines ersten Luststosses L1 mit einer Zeitdauer t1 aus der Auswurfvorrichtung und das Auswerfen des fehlerhaften Vorformlings mittels eines zweiten Luststosses L2 mit einer Zeitdauer t2 aus der weiteren Auswurfvorrichtung, wobei bevorzugt die Zeitdauer t2 grösser ist als die Zeitdauer t1. Auch diese Massnahme dient dem sicheren Austrag der fehlerhaften Vorformlinge. Als besonders zuverlässig hat sich erwiesen, wenn die Zeitdauer t1 des ersten Luststosses L1 zwischen 50 und 200 ms, vorzugsweise zwischen 80 und 120 ms, beträgt und die Zeitdauer t2 des zweiten Luststosses L2 zwischen 1 und 3 s, vorzugsweise zwischen 1.5 und 2.5 s, beträgt.

Es hat sich des Weiteren als besonders zweckmässig erwiesen, wenn die erfindungsgemässe Inspektions- und Auswerfereinheit in einen Klemmförderer integriert wird. Dabei werden beispielsweise die nicht-fehlerhaften Vorformlinge von dem Nockenrad direkt (oder etwa über eine Brücke) in eine Riemenfördervorrichtung übergeben, wobei der Kragen der Vorformlinge in korrespondierenden Nuten des Riemens eingeklemmt wird.

Die Vorformlinge werden im Übrigen vorzugsweise von einer Ablaufschiene zu der Inspektions- und Auswerfereinheit gefördert.

Eine beispielhafte Ausführungsform der vorliegenden Erfindung wird im Hinblick auf eine bessere Anschaulichkeit in den beiliegenden Zeichnungen illustriert.

Es zeigt:
- Fig. 1: eine Draufsicht auf eine erfindungsgemässe Inspektions- und Auswerfereinheit;
- Fig. 2: eine Seitenansicht insbesondere eines Austragsschachts einer erfindungsgemässen Inspektions- und Auswerfereinheit mit anschliessendem Sammelbehälter;
- Fig. 3: eine Frontalansicht insbesondere eines Austragsschachts und einer Detektionseinrichtung einer erfindungsgemässen Inspektions- und Auswerfereinheit;
- Fig. 4: eine Seitenansicht einer beispielhaften Transportstrecke mit dem bevorzugten Einbauort für die erfindungsgemässe Inspektions- und Auswerfereinheit;
- Fig. 5: eine Seitenansicht einer alternativen Ausführungsform eines Austragsschachts einer erfindungsgemässen Inspektions- und Auswerfereinheit mit anschliessendem Sammelbehälter; und
- Fig. 6: eine Seitenansicht einer besonders bevorzugten Transportstrecke mit dem wiederum bevorzugten Einbauort für die erfindungsgemässe Inspektions-und Auswerfereinheit.

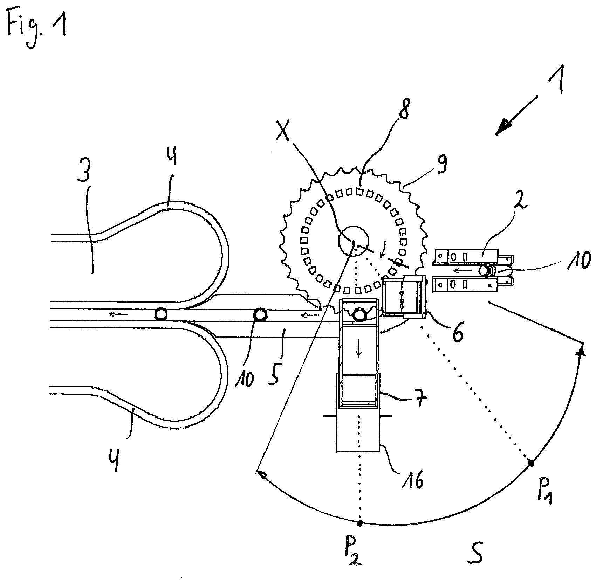

Wie in **Fig. 1** gezeigt, wird zunächst ein Vorformling 10 von der Ablaufschiene 2 zu der erfindungsgemässen Inspektions- und Auswerfereinheit 1 gefördert. Das Nocken- bzw. Sternrad 8 weist Ausnehmungen 9 auf, von denen der Vorformling 10 aufgenommen und weitertransportiert werden kann. Die Wegstrecke, welcher ein Vorformling 10 im Nocken- bzw. Sternrad 8 - d.h. in Eingriff mit einer der Ausnehmungen 9 - zurücklegt, ist mit S bezeichnet. Am Ende der Wegstrecke S wird der Vorformling 10 vermittels einer Brücke 5 an einen Klemmförderer 3, d.h. an dessen Riemen 4 übergeben, welche in der Regel Nuten aufweisen, in welche der Kragen des Vorformlings 10 eingeklemmt wird. Das Nocken- bzw. Sternrad 8 wird um die vertikale Achse X angetrieben.

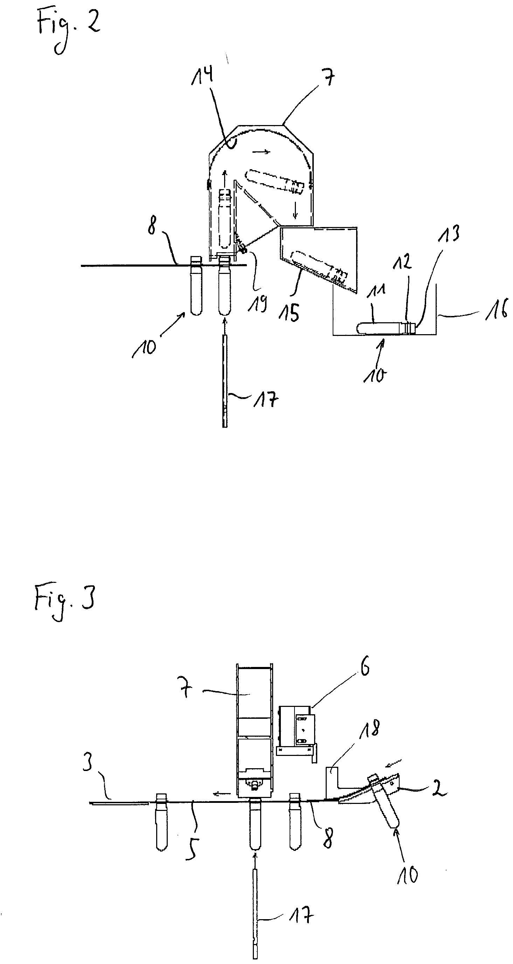

Von der der Ablaufschiene 2 jeweils gegenüberliegenden Ausnehmung 9 wird also der ankommende Vorformling 10 entlang der Wegstrecke S befördert. An einer ersten Position P1 entlang der Wegstrecke S ist dabei eine Detektionseinrichtung 6 angeordnet. Die Detektionseinrichtung 6 umfasst regelmässig zumindest eine Kamera und eine Auswerteeinheit. Mittels der zumindest einen Kamera werden Bildaufnahmen von dem Vorformling 10 erstellt, welche mit Hilfe von Bildverarbeitungsmethoden mit Sollwerten eines fehlerfreien Vorformlings verglichen werden, um festzustellen, ob etwa Ovalitäten, Stützring- bzw. Kragenbeschädigungen, Mündungsverletzungen oder ähnliche Defekte vorliegen. Wird beim Abgleich mit den Sollwerten des fehlerfreien Vorformlings eine vordefinierte Abweichung hinsichtlich etwa der Rundung, der Kragen- oder Mündungsbeschaffenheit festgestellt, so sendet die Auswerteeinheit der Detektionseinrichtung 6 ein Signal an eine Auswurfvorrichtung 17, welche weiter stromabwärts von der Detektionseinrichtung 6 entlang der Wegstrecke S in der Position P2 - angeordnet ist (vgl. **Fig. 2**). In der **Fig. 1** ist die Auswurfvorrichtung 17 allerdings nicht zu sehen, da über ihr, in fluchtender Anordnung, ein Austragsschacht 7 vorgesehen ist, mit dem die ausgeworfenen, also die fehlerhaften, Vorformlinge 10 in einen entsprechenden Sammelbehälter 16 (vgl. **Fig. 2**) überführt werden.

Die Wegstrecke S beschreibt in etwa einen Kreisbogen von 90° von ihrem Anfang bis zu ihrem Ende. Die Positionen P1 bzw. P2 der Detektionseinrichtung 6 bzw. der Auswurfvorrichtung 17 liegen in der Regel in etwa gleichmässig verteilt bei 30° und 60° (oder aber 20° und 70°) des 90° Kreisbogens. Grössere und kleinere Kreisbögen mit ggf. abweichenden Abständen sind, je nach Bedarf, vorstellbar.

In **Fig. 2** wird insbesondere der Auswurfvorgang veranschaulicht. Die Auswurfvorrichtung 17, hier in Form eines Luftrohres, befördert den als fehlerhaft erkannten Vorformling 10 mittels eines Luftstosses bzw. eines Luftstroms aus der entsprechenden Ausnehmung 9 des Nocken- bzw. Sternrades 8 heraus und in den Austragsschacht 7 hinein. Der Auswurfvorgang erfolgt also in vertikaler Richtung von unten nach oben. Innerhalb des regelmässig U-förmigen Austragsschachts 7 wird der fehlerhafte Vorformling 10 von einer abgerundeten Innenwand 14 des Austragsschachts 7 umgelenkt, wobei er anschliessend über eine (geneigte) Rutsche 15, welche sich an den Austragsschacht 7 anschliesst bzw. welche Teil des Austragsschachts 7 ist, in den Sammelbehälter 16 eingebracht wird. Man sieht, dass die Vorformlinge 10 einen im Wesentlichen zylindrischen Körper 11, einen umlaufenden Kragen bzw. Stützring 12 sowie eine kreisförmige Mündung 13 aufweisen.

Im Austragsschacht 7 kann eine zusätzliche Luftdüse 19 bzw. ein zusätzliches Luftrohr vorgesehen sein, mit welchem der Austrag der fehlerhaften Vorformlinge 10 unterstützt werden kann, so dass diese auf einem Luftkissen durch den Austragsschacht 7 hindurch getragen werden.

In **Fig. 3** erkennt man nochmals einen von der (geneigten) Ablaufschiene 2 kommenden Vorformling 10. Im Bereich des Übergangs in eine entsprechende Ausnehmung 9 des Nocken- bzw. Sternrads 8 kann eine Meldeeinheit 18 vorgesehen sein, welche die ankommenden Vorformlinge 10 an die Detektionseinrichtung 6 meldet. Die Vorformlinge 10 laufen unterhalb der Detektionseinrichtung 6 vorbei zu der Auswurfvorrichtung 17 bzw. dem Luftrohr, wo als fehlerhaft erkannte Vorformlinge 10 in vertikaler Richtung von unten nach oben ausgeworfen werden und über den Austragsschacht 7 in den Sammelbehälter 16 (vgl. **Fig. 2**) gelangen. Die fehlerfreien Vorformlinge 10 werden über die Brücke 5 an den Klemmförderer 3 weitergegeben. Die Vorformlinge 10 liegen im Übrigen mit ihrem umlaufenden Kragen 12 (bzw. Stützring) auf den Ausnehmungen 9 des Nocken- bzw. Sternrads 8 auf.

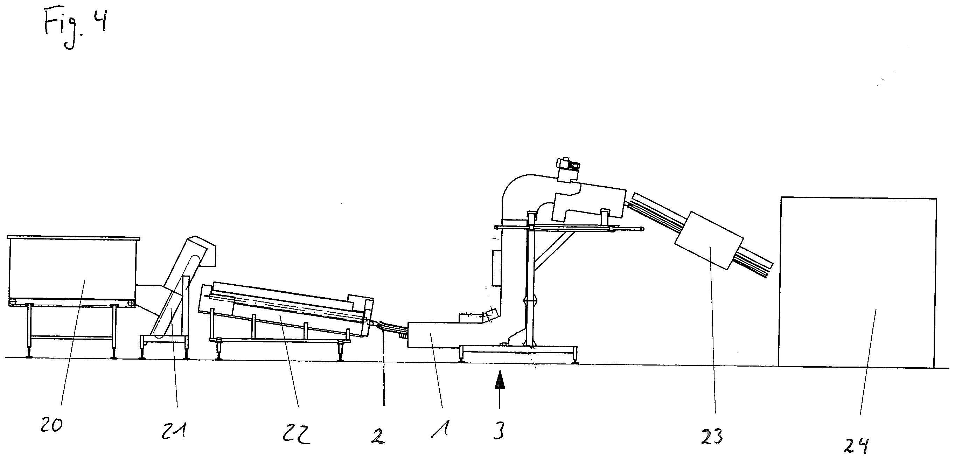

Gemäss **Fig. 4** wird schliesslich noch beispielhaft eine Transportstrecke für Vorformlinge 10 in einer Produktionsstrasse für die Herstellung von etwa PET-Flaschen veranschaulicht.

Dabei gelangen die Vorformlinge 10 von einer Beschickungseinrichtung 20 zu einem Hochförderer 21, welcher die Vorformlinge 10 an einen Rollensortierer 22 weitergibt. Von dort aus gelangen die Vorformlinge über eine Ablaufschiene 2 - nunmehr vereinzelt - in die erfindungsgemässe Inspektions- und Auswerfereinheit 1, welche vorzugsweise innerhalb des Klemmförderers 3 angeordnet ist. Im Klemmförderer 3 werden die fehlerfreien Vorformlinge 10 ggf. noch mit ionisierter und normaler Luft gerinst (vorzugsweise überkopf mit senkrecht stehenden Luftdüsen) und anschliessend an eine Übernahmeeinrichtung 23 weitergegeben. Hier werden die Vorformlinge 10 ggf. noch mit UV-Licht bestrahlt, bevor sie dann an eine Formgebungseinrichtung 24, z.B. eine Streckblasmaschine, weitergegeben werden.

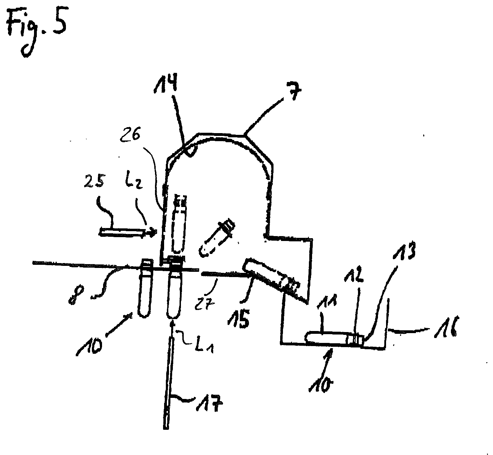

Eine alternative Ausführungsform der vorliegenden Erfindung wird in **Fig. 5** veranschaulicht. Die Auswurfvorrichtung 17 (hier in Form einer Luftdüse oder eines Luftrohres), hebt den als fehlerhaft erkannten Vorformling 10 mittels eines kurzen, vertikalen Luftstosses L1 aus der entsprechenden Ausnehmung 9 des Nocken- bzw. Sternrades 8 heraus an, so dass dieser von der weiteren Auswurfvorrichtung 25 - welche regelmässig in bzw. im Bereich der Seitenwand 26 des Austragsschachts 7 oberhalb der Mitnehmervorrichtung 8 angeordnet ist - in im Wesentlichen horizontaler Richtung in den Sammelbehälter 16 ausgeblasen werden kann und zwar mittels des Luftstosses L2. In "im Wesentlichen horizontaler Richtung" bedeutet vorliegend, dass die weitere Auswurfvorrichtung 25 bzw. die horizontale Luftdüse auch leicht nach oben oder nach unten geneigt sein kann, falls erforderlich, um einen störungsfreien Austrag der fehlerhaften Vorformlinge 10 zu gewährleisten. Der Luftstoss L2 ist regelmässig von längerer Dauer als der Luststoss L1, um sicherzustellen, dass alle fehlerhaften Vorformlinge 10 in den Sammelbehälter 16 gelangen. Die (abgeknickte) Seitenwand, in welcher gemäss **Fig. 2** die Luftdüse 19 angeordnet ist, wurde bei dieser Ausführungsform weggelassen und die weitere Auswurfvorrichtung 25 entsprechend auf der gegenüberliegenden Seite des Austragsschachts 7 angeordnet. Der wiederum U-förmige Austragsschacht 7 weist auch wieder eine abgerundete Innenwand 14 auf, um ggf. Vorformlinge 10, welche - z.B. im Falle einer möglichen Störung - einen zu starken vertikalen Luftstoss L1 erfahren haben und/oder keinen horizontalen Luftstoss L2 erfahren haben, umzuleiten und ebenfalls sicher in den Sammelbehälter 16 zu leiten. Auch in dieser Ausführungsform ist in der Regel vor dem Sammelbehälter 16 eine geneigte Rutsche 15 angeordnet. Die geneigte Rutsche weist in dieser Ausführungsform einen horizontalen Abschnitt 27 auf, welcher sich in Richtung der Mitnehmervorrichtung 8 erstreckt, um die horizontal ausgeblasenen Vorformlinge 10 entgegenzunehmen, so dass sie anschliessend über die Rutsche in den Sammelbehälter 16 geleitet werden können.

Man sieht wiederum, dass die Vorformlinge 10 einen im Wesentlichen zylindrischen Körper 11, einen umlaufenden Kragen bzw. Stützring 12 sowie eine kreisförmige Mündung 13 aufweisen.

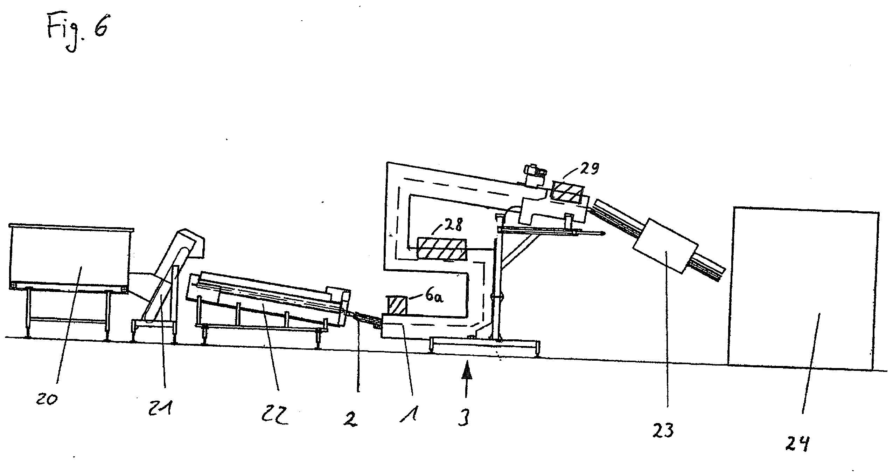

In Fig. 6 wird schliesslich eine besonders bevorzugte Transportstrecke für Vorformlinge 10 in einer Produktionsstrasse für die Herstellung von etwa PET-Flaschen veranschaulicht. Dabei gelangen die Vorformlinge 10 wiederum von einer Beschickungseinrichtung 20 zu einem Hochförderer 21, welcher die Vorformlinge 10 an einen Rollensortierer 22 weitergibt. Von dort aus gelangen die Vorformlinge über eine Ablaufschiene 2 - nunmehr vereinzelt - in die erfindungsgemässe Inspektions- und Auswerfereinheit 1 (d.h. zunächst in die Detektionseinrichtung mit einer Kamera 6a und ggf. einer Auswerteeinheit), welche vorzugsweise innerhalb des hier S-förmig ausgestalteten Klemmförderers 3 angeordnet ist. Im Mittelteil des S-förmigen Klemmförderers 3 ist eine Rinser 28 vorgesehen, in welchem die fehlerfreien (d.h. die nicht ausgeworfenen) Vorformlinge 10 überkopf, mittels senkrecht stehender Luftdüsen, mit ionisierter und/oder normaler Luft gerinst und anschliessend, im Ausgangsbereich des Klemmförderers 3, mit UV-Licht aus einer UV-Lichtquelle 29 bestrahlt werden. Danach werden die Vorformlinge 10 an eine Übernahmeeinrichtung 23 weitergegeben, wo sie bei Bedarf noch einmal mit UV-Licht bestrahlt werden können, bevor sie dann an eine Formgebungseinrichtung 24, z.B. eine Streckblasmaschine, weitergegeben werden.

### Bezugszeichenliste:

- 1: Inspektions- und Auswerfereinheit
- 2: Ablaufschiene (Zufördervorrichtung)
- 3: Klemmförderer (Wegfördervorrichtung)
- 4: Riemen
- 5: Brücke
- 6: Detektionseinrichtung
- 6a: Kamera
- 7: Austragsschacht
- 8: Nockenrad (Mitnehmervorrichtung)
- 9: Ausnehmungen
- 10: Vorformling
- 11: zylindrischer Körper
- 12: Kragen
- 13: Mündung
- 14: Innenwandung Austragsschacht
- 15: Rutsche
- 16: Sammelbehälter
- 17: Auswurfvorrichtung
- 18: Meldeeinheit
- 19: zusätzliche Luftdüse des Austragsschachts
- 20: Beschickungseinrichtung
- 21: Hochförderer
- 22: Rollensortierer
- 23: Übernahmeeinrichtung
- 24: Formgebungseinrichtung (Streckblasmaschine)
- 25: weitere Auswurfvorrichtung
- 26: Seitenwand (des Austragsschachts)
- 27: horizontaler Abschnitt (der Rutsche)
- 28: Rinser
- 29: UV-Lichtquelle
- X: vertikale Antriebsachse
- S: Wegstrecke
- P1: Position 1
- P2: Position 2
- L1: erster Luftstoss
- L2: zweiter Luftstoss
- t1: Zeitdauer erster Luftstoss
- t2: Zeitdauer zweiter Luftstoss

## Patentansprüche

1. Inspektions- und Auswerfereinheit für Vorformlinge für Kunststoffbehälter in einer Transportstrecke, aufweisend
zumindest eine Mitnehmervorrichtung (8), welche von einer Zufördervorrichtung (2) zu der Inspektions- und Auswerfereinheit (1) gelangende Vorformlinge (10) aufnimmt, weitertransportiert und jedenfalls einen Teil der Vorformlinge (10) an eine Wegfördervorrichtung (3) weitergibt;
zumindest eine Detektionsvorrichtung (6) mittels derer fehlerhafte Vorformlinge (10) in der Mitnehmervorrichtung (8) erkannt werden; sowie
zumindest eine Auswurfvorrichtung (17, 25) mittels derer als fehlerhaft erkannte Vorformlinge (10) aus der Mitnehmervorrichtung (8) entfernt werden.

2. Inspektions- und Auswerfereinheit gemäss Anspruch 1, **dadurch gekennzeichnet, dass** die Mitnehmervorrichtung (8) in Form eines Nockenrades ausgestaltet ist, welches um eine vertikale Achse (X) angetrieben ist.

3. Inspektions- und Auswerfereinheit gemäss Anspruch 1 oder 2, **dadurch gekennzeichnet, dass** mit jeder Ausnehmung (9) des Nockenrades (8) ein Vorformling (10) in Eingriff gelangt.

4. Inspektions- und Auswerfereinheit gemäss einem der Ansprüche 1 bis 3, **dadurch gekennzeichnet, dass** die Detektionsvorrichtung (6) zumindest eine Kamera und eine Auswerteeinheit aufweist.

5. Inspektions- und Auswerfereinheit gemäss einem der Ansprüche 1 bis 4, **dadurch gekennzeichnet, dass** die Auswurfvorrichtung (17) eine pneumatische Auswurfvorrichtung ist, welche vorzugsweise in Form eines Luftrohrs oder aber einer Luftdüse ausgestaltet ist.

6. Inspektions- und Auswerfereinheit gemäss einem der Ansprüche 1 bis 5, **dadurch gekennzeichnet, dass** die Auswurfvorrichtung (17) eine mechanische Auswurfvorrichtung ist, welche vorzugsweise in Form eines Stössels ausgestaltet ist.

7. Inspektions- und Auswerfereinheit gemäss einem der Ansprüche 1 bis 6, **dadurch gekennzeichnet, dass** die Auswurfvorrichtung (17) die Vorformlinge (10) in vertikaler Richtung von unten nach oben auswirft.

8. Inspektions- und Auswerfereinheit gemäss einem der Ansprüche 1 bis 7, **dadurch gekennzeichnet, dass** in fluchtender Anordnung oberhalb der Auswurfvorrichtung (17) ein Austragsschacht (7) vorgesehen ist, mittels welchem die ausgeworfenen Vorformlinge (10) etwa in eine Sammelvorrichtung (16) ausgetragen werden.

9. Inspektions- und Auswerfereinheit gemäss Anspruch 8, **dadurch gekennzeichnet, dass** der Austragsschacht (7) eine U-förmige Ausgestaltung aufweist und eine zusätzliche Luftdüse (19) oder aber ein zusätzliches Luftrohr umfasst.

10. Inspektions- und Auswerfereinheit gemäss einem der Ansprüche 1 bis 6, **dadurch gekennzeichnet, dass** die Auswurfvorrichtung (17) die Vorformlinge (10) in vertikaler Richtung von unten nach oben anhebt.

11. Inspektions- und Auswerfereinheit gemäss Anspruch 10, **dadurch gekennzeichnet, dass**, vorzugsweise oberhalb der Mitnehmervorrichtung (8), eine weitere Auswurfvorrichtung (25), vorzugsweise eine Luftdüse, vorgesehen ist, mittels derer die angehobenen Vorformlinge (10) in im Wesentlichen horizontaler Richtung ausgeworfen werden.

12. Inspektions- und Auswerfereinheit gemäss einem der Ansprüche 10 bis 11, **dadurch gekennzeichnet, dass** in fluchtender Anordnung oberhalb der Auswurfvorrichtung (17) ein Austragsschacht (7) vorgesehen ist, mittels welchem ggf. zu stark angehobene Vorformlinge (10) etwa in eine Sammelvorrichtung (16) ausgetragen werden.

13. Inspektions- und Auswerfereinheit gemäss Anspruch 12, **dadurch gekennzeichnet, dass** die weitere Auswurfvorrichtung (25) im Austragsschacht (7), vorzugsweise in einer Seitenwand (26) desselben, angeordnet ist.

14. Verfahren zum Erkennen und Auswerfen von fehlerhaften Vorformlingen für Kunststoffbehälter in einer Transportstrecke, mit den folgenden Schritten:
(a) Aufnahme von von einer Zufördervorrichtung (2) gelieferten Vorformlingen (10) in korrespondierenden Ausnehmungen (9) einer Mitnehmervorrichtung (8);
(b) Transportieren der einzelnen Vorformlinge (10) entlang einer definierten Wegstrecke (S) von der Zufördervorrichtung (2) in Richtung einer Wegfördereinrichtung (3);
(c) Erstellen von Bildaufnahmen von den einzelnen Vorformlingen (10) in der Mitnehmervorrichtung (8) mittels von zumindest einer Kamera einer Detektionsvorrichtung (6) in einer Position (P1), vorzugsweise am Anfang der Wegstrecke (S);
(d) Auswertung der Bildaufnahmen der einzelnen Vorformlinge (10) in einer Auswerteeinheit der Detektionsvorrichtung (6);
(e) Senden eines Signals von der Auswerteeinheit an zumindest eine Auswurfvorrichtung (17, 25), wenn ein Vorformling (10) als fehlerhaft erkannt wurde, und
(f) Entfernen des fehlerhaften Vorformlings (10) in einer Position (P2) der Wegstrecke (S), welche stromabwärts von der Position (P1) gelegen ist, mittels der zumindest einen Auswurfvorrichtung (17, 25).

15. Verfahren gemäss Anspruch 14, **dadurch gekennzeichnet, dass** Schritt (f) das Auswerfen des fehlerhaften Vorformlings (10) auf pneumatische oder mechanische Weise, bevorzugt in vertikaler Richtung von unten nach oben, umfasst.

16. Verfahren gemäss Anspruch 14 oder 15, **dadurch gekennzeichnet, dass** die Vorformlinge (10) durch einen Austragsschacht (7), welcher in fluchtender Anordnung oberhalb der Auswurfvorrichtung (17) vorgesehen ist, ausgetragen werden, wobei in dem Austragsschacht (7) vorzugsweise eine zusätzliche Luftdüse (19) oder aber ein zusätzliches Luftrohr vorhanden ist, welche(s) ggf. gleichzeitig mit der Auswurfwurfvorrichtung (17) aktiviert wird.

17. Verfahren gemäss einem der Ansprüche 14 bis 16, **dadurch gekennzeichnet, dass** die Mitnehmervorrichtung (8) ein vertikal angetriebenes Nockenrad (8) aufweist und dass die Wegstrecke (S) ungefähr einen Kreisbogen, vorzugsweise einen etwa 90° Kreisbogen, besonders bevorzugt einen etwa 120° Kreisbogen, beschreibt.

18. Verfahren gemäss Anspruch 17, **dadurch gekennzeichnet, dass** die Position (P2), in welcher die fehlerhaften Vorformlinge (10) ausgeworfen werden, zumindest 30° stromabwärts der Position (P1) entlang des Kreisbogens liegt.

19. Verfahren gemäss Anspruch 14, **dadurch gekennzeichnet, dass** gemäss Schritt (f) der fehlerhafte Vorformling (10) in vertikaler Richtung von unten nach oben angehoben wird, um dann in horizontaler Richtung ausgeworfen zu werden, und zwar jeweils bevorzugt auf pneumatische Weise.

20. Verfahren gemäss Anspruch 19, **dadurch gekennzeichnet, dass** das Anheben des fehlerhaften Vorformlings (10) mittels eines ersten Luftstosses (L1) mit einer Zeitdauer (t1) aus der Auswurfvorrichtung (17) erfolgt und das Auswerfen des fehlerhaften Vorformlings (10) mittels eines zweiten Luftstosses (L2) mit einer Zeitdauer (t2) aus einer weiteren Auswurfvorrichtung (25) erfolgt, wobei bevorzugt t2 > t1 ist.

21. Verfahren gemäss Anspruch 20, **dadurch gekennzeichnet, dass** die Zeitdauer (t1) des ersten Luftstosses (L1) zwischen 50 und 200 ms, vorzugsweise zwischen 80 und 120 ms, beträgt und die Zeitdauer (t2) des zweiten Luftstosses (L2) zwischen 1 und 3 s, vorzugsweise zwischen 1.5 und 2.5 s, beträgt.

22. Klemmförderer für Vorformlinge für Kunststoffbehälter, aufweisend eine Inspektions- und Auswerfereinheit (1) gemäss Anspruch 1.
